# FASCICULE DE BREVET EUROPEEN

(11) **EP 1 125 374 B1**
(45) Date de publication et mention de la délivrance du brevet: **26.02.2003**
(21) Numéro de dépôt: 99947519.7
(22) Date de dépôt: 08.10.1999
(51) Int. Cl.: H04B 7/005

(54) **PROCEDE DE MISE EN SERVICE D'UNE LIAISON DE DONNEES NUMERIQUES EMPRUNTANT UN MILIEU DE TRANSMISSION SUJET AUX PERTURBATIONS**
VERFAHREN ZUR INBETRIEBNAHME EINER DIGITALEN ÜBERTRAGUNGSSTRECKE MIT VERZERRUNG
METHOD FOR OPERATING A DIGITAL DATA LINK USING A TRANSMISSION MEDIUM SUBJECT TO DISTURBANCES

(30) Priorité: 09.10.1998 FR 9812671
(43) Date de publication de la demande: 22.08.2001
(73) Titulaire: SAGEM SA, 75116 Paris (FR)
(72) Inventeur: TRINH VAN, Christian, F-75013 Paris (FR); FOLLET, Thierry, F-75013 Paris (FR)
(74) Mandataire: Bloch, Gérard
(86) Numéro de dépôt international: FR9902414
(87) Numéro de publication internationale: WO00022751

(56) Documents cités:
- EP-A- 0 696 857
- EP-A- 0 715 423

## Description

La présente invention concerne un procédé de mise en service d'une liaison de données numériques entre un émetteur et un récepteur reliés par un milieu de transmission, sujet aux perturbations, procédé dans lequel on émet sur le milieu de transmission un signal de données, protégées par un code détecteur et correcteur d'erreurs d'efficacité déterminée, en ajustant le niveau de signal reçu par le récepteur pour qu'y apparaissent des erreurs en nombre limité, et on augmente ensuite le niveau de l'émission pour garantir en réception une marge de sécurité (M) contre les perturbations, un point de mesure de taux d'erreur avant correction (S1) étant déterminé en réception pour un niveau reçu (N1).

Un tel procédé est enseigné par EP-A-0715423.

La transmission de données numériques nécessite de pouvoir les recevoir sans erreur ou, au moins; de maîtriser ce taux, c'est-à-dire maîtriser la qualité de la liaison numérique.

Si l'on considère une liaison hertzienne, le niveau du signal reçu doit présenter un rapport signal à bruit suffisant pour que la qualité voulue soit assurée même en présence de perturbations atmosphériques.

Pour estimer le niveau prévisionnel du signal reçu par le récepteur, on prend en compte, par le calcul, la puissance de sortie de l'émetteur, le gain des antennes et les pertes dans les conducteurs électriques les alimentant, la longueur de la liaison hertzienne, ainsi que les obstacles éventuels et les perturbateurs connus dans celle-ci.

La sensibilité du récepteur doit alors être suffisante pour qu'il détecte des signaux de niveau égal, voire inférieur, à ce niveau prévisionnel. L'ensemble des valeurs calculées ci-dessus forme un bilan énergétique prévisionnel de la liaison. L'atténuation du trajet atmosphérique est cependant susceptible de varier selon les conditions atmosphériques telles que la pluie ou les perturbateurs, si bien qu'il faut prendre une marge de sécurité, dans l'inéquation évoquée ci-dessus relative à la sensibilité du récepteur, pour tolérer un accroissement d'atténuation.

Lors de la mise en service de la liaison, il convient de vérifier la conformité du bilan réel avec le bilan prévisionnel, puisque le pointage des antennes ou encore des perturbateurs non prévus représentent des aléas.

De façon classique, on diminue progressivement à cet effet le niveau de l'émetteur jusqu'à ce que le récepteur fonctionne à son seuil minimal de détection. Il détecte et signale alors la présence de nombreuses erreurs et l'opérateur de mise en service est ainsi informé du fait que le seuil vient d'être atteint.

Dans cette situation de fonctionnement limite, l'écart entre le niveau d'émission et le seuil de réception représente l'atténuation de la liaison. Pour augmenter cet écart afin de disposer d'une marge de sécurité dans le bilan de liaison, permettant de tolérer une dégradation temporaire de la transmission, c'est le niveau d'émission qu'il faut augmenter, puisque le récepteur à déjà, en pratique, une sensibilité optimale c'est-à-dire un seuil de niveau minimal compatible avec les parasites.

Comme la liaison est de longue portée, l'opérateur de mise en service dispose en pratique d'un canal de signalisation dans celle-ci, afin de commander ou surveiller l'une des extrémités de la liaison à partir de l'autre : côté récepteur, il peut télécommander le niveau de l'émetteur, tandis que, côté émetteur, il peut recevoir en retour les résultats des mesures de niveau reçu et/ou de taux d'erreur, après correction, évoqués ci-dessus.

Or, en pratique, le taux d'erreur après correction varie très rapidement dans une plage restreinte de niveau de réception. Si le niveau de signal reçu est au-dessus de cette plage, le code auto-correcteur supprime les quelques erreurs éventuelles et aucune information de seuil ne peut donc être acquise. Si le niveau de signal est en-dessous de la plage, le taux limite d'erreurs que peut traiter le code autocorrecteur est dépassé et ce code risque même de corriger à tort, donc d'ajouter des erreurs. En outre, le canal de signalisation porté par la liaison va se trouver coupé.

La présente invention vise à simplifier la mise en service d'une liaison de données, hertzienne ou autre.

A cet effet, l'invention concerne un procédé de mise en service d'une liaison de données numériques du type mentionné ci-dessus, caractérisé par le fait que
- d'après l'efficacité du code selon le taux d'erreur, on détermine la forme d'une courbe prévisionnelle de taux d'erreur après correction et sa position par rapport au point de mesure,
- on choisit un taux d'erreur limite acceptable sur la courbe, et,
- partant du niveau de réception sur la courbe associé au taux d'erreur limite, on remonte l'émission, selon la marge de sécurité prévue.

Ainsi, on dispose d'une information précise pour déterminer la sensibilité au bruit du récepteur puisqu'on détecte toutes les erreurs et on peut en effectuer le comptage en tout point d'une plage de niveaux reçus nettement plus large que la plage après correction. La pente : taux d'erreur/niveau reçu est nettement plus faible avant correction qu'après correction et on peut donc, sans nécessité de réglage précis de niveau, effectuer un comptage d'erreurs dans un temps limité, sans courir le risque de n'obtenir aucune information précise.

En d'autres termes, on exploite des données brutes, à taux d'erreur évoluant progressivement sur une large plage, et non des données corrigées, dont le taux d'erreur est quasiment binaire : pas d'erreurs ou trop d'erreurs, et donc peu exploitable.

L'invention sera mieux comprise à l'aide de la description suivante d'un mode de mise en oeuvre de l'invention, en référence au dessin annexé, sur lequel :

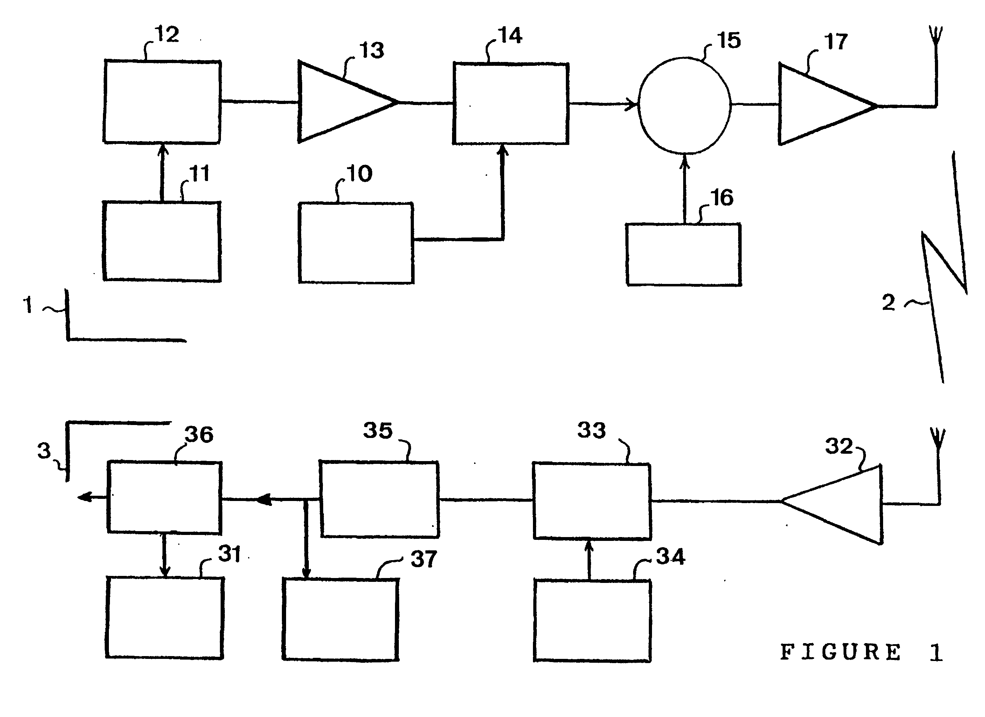

- la figure 1 est un schéma de principe illustrant une liaison numérique, ici hertzienne, entre un émetteur et un récepteur, mise en service selon le procédé de l'invention, et
- la figure 2 illustre le taux d'erreur en réception, en fonction du niveau reçu, avant et après correction par un code autocorrecteur.

La liaison hertzienne représentée comporte un émetteur 1 et un récepteur 3, la référence 2 désignant le trajet des ondes radio échangées entre eux, dans le milieu de transmission, ici l'air. Dans cet exemple, la liaison est bidirectionnelle, et peut constituer un maillon d'une chaîne de propagation, c'est-à-dire qu'un opérateur de mise en service situé au niveau de l'un des équipements 1 et 3 contrôle un émetteur d'une liaison et un récepteur d'une autre liaison et doit pouvoir contrôler l'équipement à l'autre extrémité de ces liaisons. De ce fait, on vise, dans cet exemple, à permettre une mise en service commode des liaisons à partir de l'une quelconque des extrémités. Pour la clarté de l'exposé, on se limitera cependant à expliquer en détail la mise en service de la liaison 2 dans le sens indiqué.

Le procédé consiste à émettre sur le milieu de transmission 2 un signal de données, protégées par un code détecteur et correcteur d'erreurs d'efficacité déterminée, en ajustant le niveau de signal reçu par le récepteur 3 pour qu'y apparaissent des erreurs en nombre limité, et on augmente ensuite le niveau de l'émission pour garantir en réception une marge de sécurité contre les perturbations, procédé dans lequel :
- on détermine en réception un point de mesure de taux d'erreur avant correction, pour un niveau reçu,
- d'après l'efficacité du code selon le taux d'erreur, on détermine la forme d'une courbe prévisionnelle de taux d'erreur après correction et sa position par rapport au point de mesure,
- on choisit un taux d'erreur limite acceptable sur la courbe, et,
- partant du niveau de réception sur la courbe associé au taux d'erreur limite, on remonte l'émission, de la marge de sécurité prévue.

Le signal de données de test issu d'un générateur pseudo aléatoire 11, pour la mise en service, est émis cycliquement par paquets dans des trames successives de l'émetteur 1. Les données commandent un modulateur 12 fonctionnant en fréquence intermédiaire, suivi d'un amplificateur 13. Le signal modulé traverse un mélangeur 15 pour être transposé en fréquence à l'aide d'un oscillateur local 16 relié au mélangeur 15 puis amplifié par un amplificateur de puissance 17 qui l'émet par radio. Un atténuateur calibré 14 relie ici l'amplificateur 13 au mélangeur 15. Un microcontrôleur 10 extrait des télécommandes de niveau d'émission provenant d'un canal de signalisation entrant, porté ici par la voie hertzienne de sens opposé à celui de la liaison 2, et commande en conséquence l'atténuateur 14.

Le récepteur 3 comporte en entrée un amplificateur à faible bruit 32 commandant un mélangeur 33, relié à un oscillateur 34 de transposition en fréquence, avec en aval un filtre en fréquence intermédiaire 35. Le signal à fréquence intermédiaire issu du filtre 35 est appliqué à un démodulateur 36 qui délivre les données correspondantes, ainsi qu'un signal d'horloge à leur rythme, à des circuits d'utilisation et qui calcule le nombre des erreurs détectées dans chaque paquet reçu, lors de la correction de celui-ci par un code détecteur et correcteur d'erreurs qu'il met en oeuvre sur les paquets des données reçus, avec une efficacité déterminée. Cette dernière information de nombre ou taux d'erreur des données brutes est fournie à un microcontrôleur 31 qui les traite et les renvoie, par l'intermédiaire de la liaison de signalisation, au microcontrôleur 10, ce qui permet de mesurer le taux d'erreur brut, avant correction d'erreurs. Un circuit calibré 37 de détection du champ reçu, relié en sortie du filtre 35, est ici prévu pour mesurer de façon précise le niveau à l'accès antenne. Il permet d'associer les taux d'erreur mesurés avec le niveau de champ reçu. On remarquera cependant que, comme expliqué plus loin, l'information nécessaire pour la mise en oeuvre du procédé est le taux d'erreur et non le niveau de réception.

Le schéma n'est que didactique, car en fait les circuits logiques appartiennent ici à un PC qui commande le niveau de l'émetteur 1 (ou le récepteur 3), pour l'émission des données de télécommande ou de télémesure.

Un clavier et un écran/souris permettent, à un opérateur de mise en service, de lancer un logiciel de réglage automatique de niveau d'émission. Ce logiciel recueille les mesures de taux d'erreur et de niveau de signal en réception et, d'après ceux-ci, fixe, de façon automatique, le niveau d'émission de service, comme cela est expliqué plus loin.

La séquence de bits de test correspond à des données quelconques qui ont été protégées par adjonction de bits supplémentaires déterminés d'après ces données ou même par fusion du tout en un nouveau bloc de données. Ces bits supplémentaires présentent une corrélation avec ces données, pour permettre de détecter, en réception, la présence de bits erronés, les localiser et donc les corriger par forçage à l'état binaire opposé. Selon le pourcentage de bits supplémentaires et la taille des données à protéger, on peut déterminer mathématiquement l'efficacité du code de protection ainsi constitué, en fonction du taux d'erreur en réception. Ainsi, un faible taux moyen d'erreur en réception permettra des corrections appropriées, tandis qu'un taux moyen plus élevé correspondra parfois, temporairement, à un taux instantané produisant un nombre d'erreurs excessif, que l'on pourra détecter comme tel mais sans pouvoir localiser, et donc corriger, celles-ci.

Le code autocorrecteur ci-dessus permet donc un fonctionnement à un niveau de réception plus faible qu'en l'absence de code de correction. Connaissant, mathématiquement, l'efficacité du code correcteur, on peut donc considérer qu'il équivaut, de par son effet, à remonter fictivement le niveau effectivement reçu et donc, par ce fait, à diminuer le taux d'erreur.

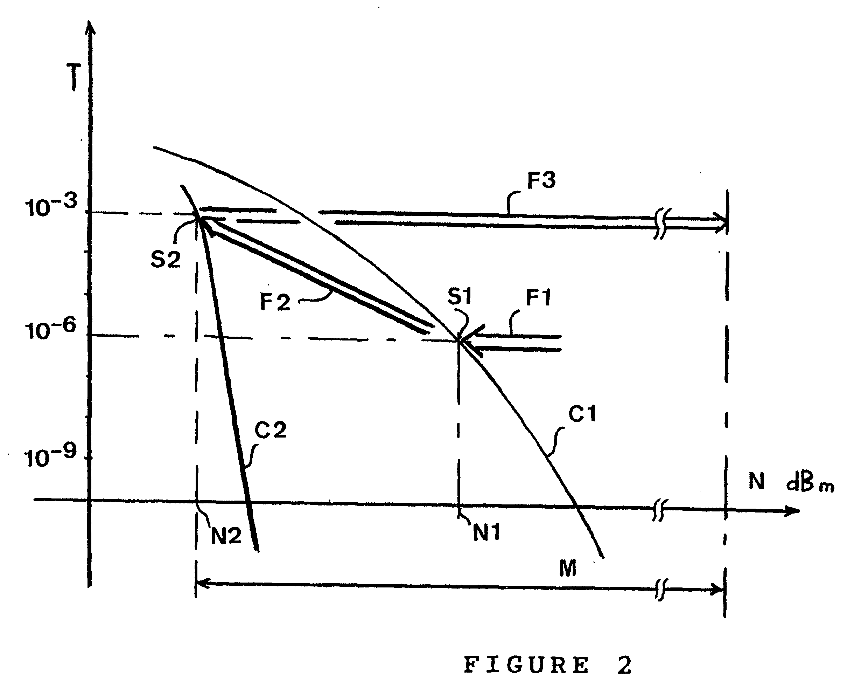

Sur la figure 2, à échelles log/log, la courbe C1 représente, en ordonnée, le taux d'erreur T avant correction en fonction du niveau absolu N de signal de champ électrique reçu, exprimé en dBm. Comme on le conçoit, le taux d'erreur T varie en sens inverse du niveau reçu N.

La courbe C1 a une forme connue, dans la mesure où la distribution statistique de bruit au cours du temps est connue, c'est-à-dire que, connaissant la puissance moyenne du bruit, on peut estimer la probabilité pour qu'une crête instantanée de bruit (addition de plusieurs impulsions, ou rafales, de bruit d'origines diverses et se produisant à des instants aléatoires) dépasse d'un certain facteur le niveau moyen et risque donc d'être détectée. Cette probabilité a une allure d'exponentielle décroissante en fonction du facteur d'amplitude ci-dessus. La détermination d'un point (S1) de la courbe C1 détermine donc la position de tous les points de celle-ci.

La courbe C2 correspond à la courbe C1 après correction des erreurs par le code dans le démodulateur 36. Si l'on considère un niveau reçu N, la courbe C2 présente un taux d'erreur T bien moindre que pour C1. Comme expliqué plus haut, un taux d'erreur faible sur C1, 10⁻⁶ par exemple, correspond à une correction à pleine efficacité par le code, si bien que la courbe C2 est bien en dessous de C1, à des valeurs quasiment nulles. Pour un taux d'erreur moyen plus élevé, 10⁻² à 10⁻³ par exemple, la courbe C2 se rapproche par contre de la courbe C1 car il se produit plus souvent des rafales de bruits qui se cumulent et dépassent alors le seuil de détection, si bien que l'efficacité du code diminue alors.

Ainsi donc, comme on vient de l'expliquer, l'efficacité du code permet de déterminer la position de la courbe après correction C2 par rapport à la courbe avant correction C1. On peut encore raisonner à taux d'erreur T déterminé, par exemple 10⁻⁶ au point S1, et déterminer le point de même ordonnée de la courbe C2, c'est-à-dire la marge de gain en dB, par exemple 5 dB pour un niveau donné, qu'apporte le code autocorrecteur, pour lutter contre le bruit autrement que par une augmentation du niveau reçu.

On a choisi ici un seuil de taux d'erreur de T = 10⁻³, correspondant à un niveau de seuil reçu N2 (point S2).

Selon le procédé, pour déterminer le point S2, on effectue, par le logiciel du PC, la détermination d'un point S1, en réglant le niveau de l'émetteur 1 afin de détecter des erreurs dans le récepteur 3.

Ici, on part d'un niveau d'émission suffisamment élevé pour disposer de la liaison de signalisation et on l'abaisse (flèche F1) à un niveau N1 pour lequel le taux d'erreur T avant correction est mesurable dans un temps limité ne dépassant pas quelques minutes et avec un nombre significatif d'erreurs. A titre d'exemple, une liaison au débit de 10⁸ bit/s fournirait 100 erreurs par seconde et donc une mesure précise du taux d'erreur, pour un taux d'erreur de 10⁻⁶ au niveau S1. Cependant, une réception à un niveau supérieur à S1 et correspondant par exemple à un taux d'erreur T de 10⁻⁸ fournirait aussi, en une à deux minutes, une centaine d'erreurs.

Ayant ainsi déterminé avec précision la position d'un point quelconque S1 de la courbe C1 permettant un comptage exploitable d'erreurs, on peut en déduire la position de la courbe C2 par rapport à ce point S1, en déterminant les deux points sur la courbe C2, respectivement de même abscisse et de même ordonnée que S1, ou encore en traçant la courbe C1 et en translatant, verticalement et/ou horizontalement, chacun de ses points d'une longueur spécifique à chacun, selon l'effacité du code au point considéré. Ayant choisi ici un seuil de taux d'erreur T de 10⁻³, la courbe C2 fournit le niveau N2 du point S2. Ainsi, partant de tout point S1, on détermine (flèche F2) la position du point S2.

Comme évoqué plus haut, le taux d'erreur T est le paramètre nécessaire, qu'il faut connaître, pour déterminer que l'on est sur la courbe C1. Comme l'évoque la représentation en échelles relatives (logarithmiques), le niveau absolu de réception N1 n'intervient pas en tant que tel sur la détermination de l'augmentation ultérieure [M-(N1-N2)] de niveau l'émetteur 1, correspondant aux flèches F2 et F3 représentant respectivement l'efficacité du code pour le taux d'erreur (écart relatif N1-N2) et le facteur de marge M choisi).

La liaison de données fournit ici, comme évoqué plus haut, un canal de signalisation d'échange de données entre l'émetteur 1 et le récepteur 3, permettant, à un opérateur de mise en service et au PC, de recevoir par exemple par la liaison de sens opposé, les mesures de niveau reçu (37) et de taux d'erreur avant correction (36) s'il est côté émetteur 1. S'il est côté récepteur 3, l'opérateur ou le PC peut télécommander l'atténuateur programmable 14 et ainsi régler le niveau d'émission et donc de réception. D'une façon générale, l'atténuateur 14 pourrait être disposé en tout point de la chaîne de transmission des données dans l'émetteur 1 ou dans le récepteur 3. Comme le taux d'erreur avant correction (10⁻⁶ à 10⁻⁸ par exemple) reste limité, la liaison logique, et donc le canal de signalisation pour la mise en service, reste toujours établie puisque le code garde toute son efficacité en sortie du démodulateur 36. Un canal de signalisation empruntant le réseau téléphonique ou autre n'est cependant pas à exclure.

Comme le filtre 35 présente ici une bande passante relativement grande par rapport à la largeur de canal utile, un émetteur parasite de fréquence proche de la bande utile et de niveau bien supérieur au niveau N1 de signal utile à mesurer dans cette bande, risquerait de faire remonter le signal détecté (37) à un niveau sans commune mesure avec celui du signal utile N1. Afin de déceler la présence de tels perturbateurs, et donc vérifier la validité de la mesure du niveau de signal reçu de l'émetteur 1, on fait varier le niveau d'émission d'un facteur déterminé et on vérifie que le niveau du signal reçu N1 varie selon le même facteur. La présence d'un signal parasite, ajoutant une constante dans la mesure de niveau de signal reçu, fausse par contre la proportionnalité entre l'émission et la mesure en réception.

Un défaut de proportionnalité entre les variations de niveau émis et reçu N1 peut ainsi être mesuré et on peut éventuellement corriger la mesure de niveau N1. Cependant, si le signal perturbateur est nettement plus important que le signal utile, la correction éventuelle est imprécise. Pour éviter ce genre d'imprécision, on effectue une mesure supplémentaire de contrôle du niveau reçu, après avoir préalablement augmenté le niveau d'émission du facteur déterminé et on retient, comme valeur de mesure initiale N1, la valeur de la mesure supplémentaire après l'avoir diminuée dudit facteur, par exemple 25 dB. Les signaux perturbateurs sont ainsi ramenés, en valeur relative, à un niveau faible devant le signal utile.

Pour cela, on fait varier le niveau d'émission en télécommandant l'atténuateur calibré 14 de l'étage à fréquence intermédiaire de l'émetteur 1, pour supprimer l'atténuation voulue, ici 25 dB, et par exemple supprimer ainsi toute atténuation. Comme l'atténuateur 14 est dans un étage à puissance limitée, avant l'amplificateur de puissance 17, ses pertes parasites en exploitation sont faibles et peuvent être compensées en remontant le gain de la chaîne.

Une fois le point S2 déterminé, on augmente alors l'émission (flèche F3) du facteur de marge de sécurité M déterminé. Les tables normalisées existantes de probabilité de manifestation de perturbations de la liaison 2 en fonction de la marge ci-dessus permettent de choisir le taux de risque d'erreur que l'on accepte pour la liaison. Une marge M de 50 dB correspond à un risque d'erreur suffisamment faible pour qu'il soit acceptable. L'augmentation du niveau de l'émetteur 1 peut alors s'effectuer par réglage du gain d'un amplificateur comme 17, si l'action sur l'atténuateur 14 ne suffit pas. En exploitation, un signal utile de données à transmettre se substitue, dans les trames, au signal de test provenant du générateur 11.

La présente invention n'est pas liée au type du milieu ou support de transmission, qui peut donc par exemple être un câble électrique ou optique.

## Revendications

1. Procédé de mise en service d'une liaison de données numériques entre un émetteur (1) et un récepteur (3) reliés par un milieu de transmission (2), sujet aux perturbations, procédé dans lequel on émet sur le milieu de transmission (2) un signal de données, protégées par un code détecteur et correcteur d'erreurs d'efficacité déterminée, en ajustant le niveau de signal reçu par le récepteur (3) pour qu'y apparaissent des erreurs en nombre limité, et on augmente ensuite le niveau de l'émission pour garantir en réception une marge de sécurité (M) contre les perturbations, un point de mesure de taux d'erreur avant correction (S1) étant déterminé en réception pour un niveau reçu (N1),
procédé **caractérisé par le fait que**
- d'après l'efficacité du code selon le taux d'erreur, on détermine la forme d'une courbe prévisionnelle de taux d'erreur après correction (C2) et sa position par rapport au point de mesure (S1),
- on choisit un taux d'erreur limite acceptable sur la courbe (C2), et,
- partant du niveau de réception (S2) sur la courbe (C2) associé au taux d'erreur limite, on remonte l'émission, selon la marge de sécurité prévue.

2. Procédé selon la revendication 1, dans lequel on utilise la liaison pour échanger des données de mise en service entre l'émetteur (1) et le récepteur (3).

3. Procédé selon l'une des revendications 1 et 2, dans lequel, pour vérifier une mesure du niveau (N1) de signal reçu de l'émetteur (1), on fait varier le niveau d'émission d'un facteur déterminé et on vérifie que le niveau (N1) du signal reçu varie selon le même facteur.

4. Procédé selon la revendication 3, dans lequel on effectue une mesure supplémentaire de contrôle du niveau reçu (N1), après avoir préalablement augmenté le niveau d'émission du facteur déterminé et on retient, comme valeur de mesure initiale (N1), la valeur de la mesure supplémentaire après l'avoir diminuée dudit facteur.

5. Procédé selon la revendication 4, dans lequel on fait varier le niveau d'émission en commandant un atténuateur calibré (14) dans un étage à fréquence intermédiaire de l'émetteur (1).

## Patentansprüche

1. Verfahren zur Inbetriebnahme einer digitalen Datenverbindung zwischen einem Sender (1) und einem Empfänger (3), die durch ein Übertragungsmedium (2), das Störungen ausgesetzt ist, verbunden sind, wobei man bei dem Verfahren längs des Übertragungsmediums (2) ein Signal mit Daten sendet, die durch einen Kode zur Entdeckung und Berichtigung von Fehlern mit festgelegter Leistungsfähigkeit geschützt werden, indem man den von dem Empfänger (3) empfangenen Signalpegel einstellt, damit dort lediglich Fehler in einer begrenzten Anzahl auftreten, und indem man anschließend den Pegel der Übertragung erhöht, um so beim Empfang einen Sicherheitsabstand (M) gegen Störungen zu gewährleisten, und wobei ein Punkt zur Messung der Fehlerrate vor der Korrektur (S1) beim Empfang für einen empfangenen Pegel (N1) bestimmt wird und das Verfahren durch die Tatsache gekennzeichnet ist, dass
- man gemäß der Leistungsfähigkeit des Kodes und entsprechend der Fehlerrate die Form einer Vorhersagekurve für die Fehlerrate nach der Korrektur (C2) und ihre Position in Bezug auf den Messpunkt (S1) bestimmt,
- man eine Grenzfehlerrate auswählt, die längs der Kurve (C2) akzeptabel ist, und
- man - ausgehend von dem Empfangspegel (S2) längs der Kurve (C2), die mit der Grenzfehlerrate verbunden ist - die Übertragung gemäß dem vorgesehenen Sicherheitsabstand noch einmal durchführt.

2. Verfahren nach Anspruch 1, in dem man die Verbindung nutzt, um Inbetriebnahmedaten zwischen dem Sender (1) und dem Empfänger (3) austauscht.

3. Verfahren nach einem der Ansprüche 1 und 2, in dem man, um eine Messung des Pegels (N1) des von dem Sender (1) empfangenen Signals zu überprüfen, den Übertragungspegel um einen festgelegten Faktor schwanken lässt und überprüft, dass der Pegel (N1) des empfangenen Signals gemäß dem gleichen Faktor schwankt.

4. Verfahren nach Anspruch 3, in dem man eine ergänzende Messung zur Kontrolle des Empfangspegels (N1) durchführt, nachdem man zuvor den Übertragungspegel um den festgelegten Faktor erhöht hat, und man als anfänglichen Messwert (N1) den Wert der ergänzenden Messung berücksichtigt, nachdem dieser um den angegebenen Faktor verringert worden ist.

5. Verfahren nach Anspruch 4, in dem man den Übertragungspegel schwanken lässt, indem man ein kalibriertes Dämpfungsglied (14) in einer Zwischenfrequenzstufe des Senders (1) steuert.

## Claims

1. Process for establishing a digital data connection between a transmitter (1) and a receiver (3), linked by a transmission medium (2) that is subject to disturbance effects, a process in which a data signal is transmitted via the transmission medium (2), which data are protected by an error detection and correction code of known effectiveness, while adjusting the signal level that is received by the receiver (3) so that only a limited number of errors are apparent, and the transmission level is then increased ensuring that a safety margin (M) is built-in to counter the effect of disturbances upon reception, a pre-correction error rate measurement point (S1), for a received level (N1), being determined upon reception, the process being **characterized in that**
- depending on the effectiveness of the code with respect to the error rate, an anticipated post-correction error rate form of a curve (C2) and its position in relation to the measurement point (S1) are determined,
- an acceptable error rate limit acceptable on the curve (C2) is chosen, and,
- starting from the reception level (S2) on the curve (C2) that relates to the error rate limit, the transmission is increased according to the projected safety margin.

2. Process in accordance with claim 1, wherein the connection is used to exchange connection-establishing data between the transmitter (1) and the receiver (3).

3. Process in accordance with claim 1 or 2, wherein, to check a measurement of the signal level (N1) received from the transmitter (1), the transmission level is varied by a set factor and then a check is made that the level (N1) of received signal varies by the same factor.

4. Process in accordance with claim 3, wherein an additional control measurement of the received level (N1) is made, once the transmission level has been previously increased by the set factor and the value of the additional measurement decreased by the stated factor is retained as the initial measurement value (N1).

5. Process in accordance with claim 4, wherein the transmission level is varied by controlling a calibrated attenuator (14) in an intermediate frequency stage of the transmitter (1).
